# EUROPEAN PATENT APPLICATION

(11) **EP 4 827 086 A1**
(43) Date of publication of application: **21.10.2026**
(21) Application number: 25315132.8
(22) Date of filing: 16.04.2025
(51) Int. Cl.: H04N 19/105, H04N 19/11, H04N 19/119, H04N 19/593, H04N 19/70

(54) **METHOD AND APPARATUS FOR PROCESSING A PICTURE EMPLOYING A PLURALITY OF CONFIGURATIONS FOR A FUSION-BASED PREDICTION PROCESS**

(71) Applicant: Beijing Xiaomi Mobile Software Co., Ltd., Beijing Beijing 100085 (CN)
(72) Inventor: Tissier, Alexandre, Beijing, 100085 (CN); Ghaznavi Youvalari, Ramin, Beijing, 100085 (CN); Abdoli, Mohsen, Beijing, 100085 (CN); Plowman, Frank, Beijing, 100085 (CN)
(74) Representative: Zimmermann, Tankred Klaus

(57) **Abstract**

A method of processing one or more blocks of a picture includes predicting a current block using a fusion-based prediction process configured according to one of a plurality of configurations for one or more fusion-based prediction processes, wherein each configuration employs a different number of prediction modes to be fused.

## Description

### Technical Field

The present disclosure generally relates to the field of encoding/decoding pictures, images or videos, and embodiments of the present disclosure concern improvements for processing a block of a picture based on blending or fusing two or more prediction signals. More specific embodiments of the present disclosure relate to methods and apparatus for processing one or more blocks of a picture, using different configurations for fusion-based prediction processes, so that a prediction may be optimized with regard to an amount of prediction modes to be used by the fusion-based prediction process.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, an image or a video, e.g., when encoding and/or decoding of the picture, the image or the video, a state-of-the-art process may predict a block of a picture using fusion methods that obtain a prediction for the block based on blending or fusing two or more prediction modes or signals.

Thus, there is a need to provide further improvements for processing a picture, an image or a video, e.g., when encoding and/or decoding of the picture, the image or the video.

### Summary

The present disclosure provides a method of processing one or more blocks of a picture, the method comprising:
predicting a current block using a fusion-based prediction process configured according to one of a plurality of configurations for one or more fusion-based prediction processes, wherein each configuration employs a different number of prediction modes to be fused.

In accordance with embodiments, the one configuration is selected using at least one predefined feature.

In accordance with embodiments, the predefined feature is obtained using one or more of the following:
- signaled information about one or more neighboring blocks of the current block,
- one or more reconstructed samples of one or more neighboring blocks of the current block.

In accordance with embodiments, the signaled information comprises one or more of the following:
- transform coding information,
- intra mode information.

In accordance with embodiments,
the transform coding information comprises one or more of the following:
   - transform skip information, e.g., a transform skip flag,
   - coded block information, e.g., a coded block flag,
   - sub-block transform information, e.g., a sub-block transform flag, and
the intra mode information comprises a prediction type performed on the one or more neighboring blocks.

In accordance with embodiments, the feature is obtained dependent on a number of respective transform codings and/or prediction types performed on the one or more neighboring blocks, the respective prediction types comprising non-fusion-based prediction tools and/or fusion-based prediction tools.

In accordance with embodiments, the predefined feature is obtained using one or more reconstructed samples of one or more neighboring blocks of the current block.

In accordance with embodiments, the predefined feature is based on
a difference between the one or more reconstructed samples, e.g., in case of a decoder side intra mode derivation (DIMD), a difference between histogram of gradient (HoG) amplitudes of blended prediction modes, like a difference between a first value, like the maximum value, and a second value, like the minimum value, of the HoG amplitudes, or
on a similarity of the one or more reconstructed samples, e.g., in case of a decoder side intra mode derivation (DIMD), a number of blended prediction modes having a similar histogram of gradient (HoG) amplitude, like HoG amplitudes within a predefined range.

In accordance with embodiments, the one configuration is selected using one or more predefined features.

In accordance with embodiments, the one configuration is selected dependent on a number of occurrences of the one or more predefined features in the one or more neighboring blocks of the current block.

In accordance with embodiments,
a first configuration, having a first amount of prediction modes to be fused, is selected, when the number of occurrences is above a first threshold,
a second configuration, having a second amount of prediction modes to be fused, is selected, when the number of occurrences is below the first threshold and above a second threshold, wherein the second amount of prediction modes is higher than the first amount, and
a third configuration, having a third amount of prediction modes to be fused, is selected, when the number of occurrences is below the first threshold and below the second threshold, wherein the third amount is higher than the second amount.

In accordance with embodiments,
- the first amount comprises only one of the prediction modes of the of the fusion-based prediction process, e.g., a best prediction mode of the N best prediction modes of the fusion-based prediction process,
- the second amount comprises only a sub-set of the prediction modes of the of the fusion-based prediction process, e.g., only M of the N best prediction modes of the fusion-based prediction process, with M < N.
- the third amount comprises all of the prediction modes of the of the fusion-based prediction process, e.g., the N best prediction modes of the fusion-based prediction process,.

In accordance with embodiments, the method comprises:
signaling, e.g., in a data stream, the selected one configuration,
wherein the signaling uses a syntax element indicating the selected configuration.

In accordance with embodiments,
a type of the syntax element is selected dependent on a number of enabled configurations, and/or
a first syntax element, like an index, is selected for a first number of enabled configurations, and a second syntax element, like a flag, is selected for a second number of enabled configurations, and/or
a context for signaling the syntax element is selected dependent on the type of the syntax element, and/or.
a context for the one or more fusion-based prediction processes is obtained dependent on the selected configuration.

The present disclosure provides an apparatus of processing one or more blocks of a picture, the apparatus comprising:
a processing module, wherein the processing module is configured to predict a current block using a fusion-based prediction process configured according to one of a plurality of configurations for one or more fusion-based prediction processes, wherein each configuration employs a different number of prediction modes to be fused, and predict the block using a fusion-based prediction process configured according to one of the plurality of configurations.

The technical solutions provided according to embodiments of the present disclosure have the following beneficial effects.

A state-of-the-art process, for processing a picture, an image or a video, e.g., when encoding and/or decoding of the picture, the image or the video, may apply prediction methods that blend multiple predictions in order to obtain the final block prediction. Such state of the art fusion-based prediction processes are configured to only fuse a fixed number of prediction modes without taking into consideration local characteristics of the block or picture. A content of the block or picture is taken into account only to the extent that a fusion-based prediction process is applied for a certain content, like natural or camera captured content. For example, for content with simple texture characteristics, such as screen content, fusion-based prediction processes are either not used or provide sub-optimal prediction performance.

Embodiments of the present disclosure address the above shortcomings in the prior art by providing different configurations for fusion-based prediction processes with each configuration using or employing a different number of prediction modes or prediction signals to be fused.

The present disclosure is advantageous because fusion prediction processes or methods may be configured so as to take into consideration the local characteristics of the block or picture, thereby providing a better prediction accuracy, while avoiding a sub-optimal prediction performance.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates an SGPM block being split into respective partitions according to certain partition mode;
- Fig. 4: illustrates a plurality of possible partition modes;
- Fig. 5(A)-Fig. 5(B): illustrate the signaling the partition split and the two intra prediction modes for a SGPM block;
- Fig. 6: illustrates a SGPM template used for reordering a candidate list for SGPM;
- Fig. 7: illustrates a PGM blending;
- Fig. 8: illustrates non-adjacent spatial neighboring blocks used in the generation of an occurrence-based intra coding (OBIC) mode's histogram generation,
- Fig. 9: illustrates template-based intra mode derivation (TIMD) templates for a cost calculation or determination,
- Fig. 10: illustrates a template area for a template-based multiple reference line intra prediction (TMRL) mode,
- Fig. 11(A)-Fig. 11(B): illustrate a collocated luma block and an adjacent chroma block used in chroma TMRL,
- Fig. 12(A)-Fig. 12(B): illustrate the template areas of a collocated luma block and an adjacent chroma block used in chroma TMRL,
- Fig. 13: illustrates for a currently processed block of a picture neighboring blocks used in a derivation of a general MPM list,
- Fig. 14(A): illustrates a flow diagram of a method of processing one or more blocks of a picture in accordance with embodiments of the present disclosure,
- Fig. 14(B): illustrates a flow diagram of a method of predicting one or more blocks of a picture in accordance with embodiments of the present disclosure,
- Fig. 15: illustrates a flow diagram of a method for decoding a block in accordance with embodiments of the present disclosure,
- Fig. 16: illustrates a first configuration for a decoder side intra mode derivation (DIMD) in accordance with embodiments of the present disclosure,
- Fig. 17: illustrates a second configuration for a DIMD in accordance with embodiments of the present disclosure,
- Fig. 18: illustrates a third configuration for a DIMD in accordance with embodiments of the present disclosure,
- Fig. 19(A)-Fig. 19(C): illustrate different scenarios using transform information for selecting a configurations for a fusion-based prediction process in accordance with embodiments of the present disclosure,
- Fig. 20: illustrates a flow diagram of a method for selecting a configurations for a fusion-based prediction process using a single predefined feature in accordance with embodiments of the present disclosure,
- Fig. 21: illustrates a flow diagram of a method for selecting a configurations for a fusion-based prediction process using multiple predefined features in accordance with embodiments of the present disclosure,
- Fig. 22: illustrates a flow diagram of a method for decoding an encoded data stream in accordance with embodiments of the present disclosure,
- Fig. 23: illustrates a flow diagram of a method for encoding a picture into an encoded data stream in accordance with embodiments of the present disclosure,
- Fig. 24: illustrates a block diagram of an apparatus of processing one or more blocks of a picture in accordance with embodiments of the present disclosure,
- Fig. 25: illustrates a block diagram of a decoder for decoding an encoded data stream in accordance with embodiments of the present disclosure,
- Fig. 26: illustrates a block diagram of an encoder for encoding a picture into an encoded data stream in accordance with embodiments of the present disclosure,
- Fig. 27: illustrates a data stream in accordance with embodiments of the present disclosure, and
- Fig. 28: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein may be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

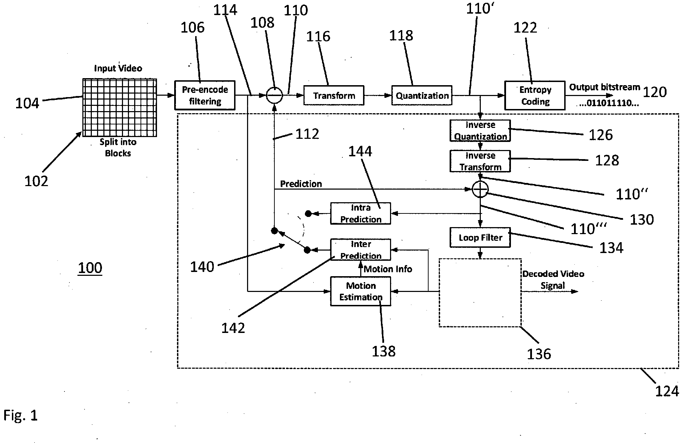

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110"' that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

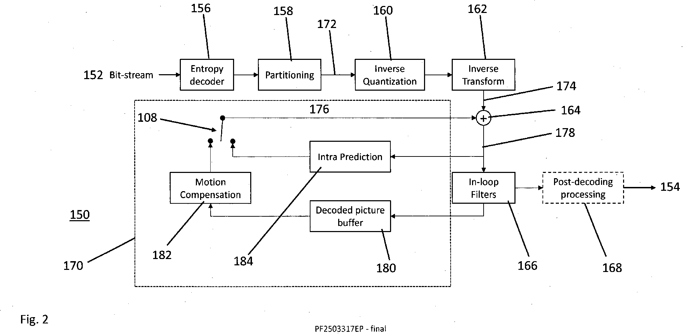

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Description of tools in VVC and Enhanced Compression Model (ECM)

In the following a brief description of ECM and VVC/VTM tools, e.g., for chroma prediction is provided, which are described in more detail in the JVET-AG2025 and JVET-T2002 documents.

### Spatial Geometric partitioning mode (SGPM)

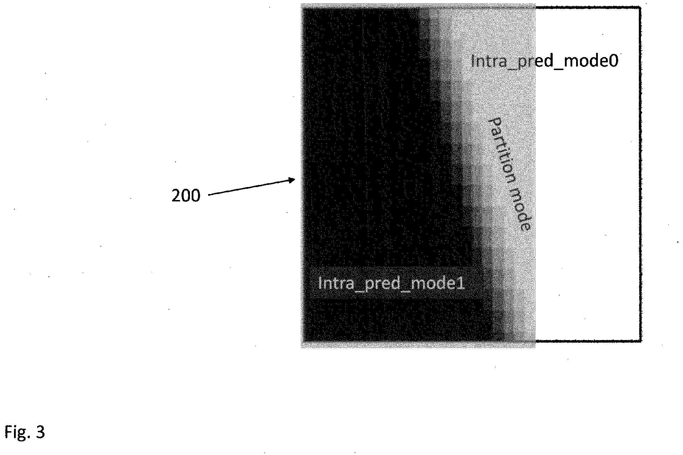

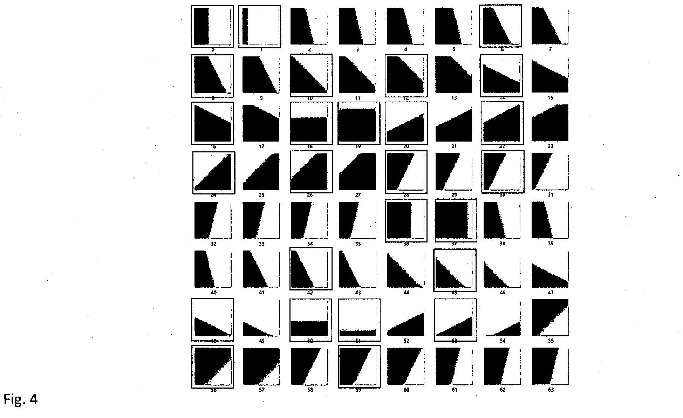

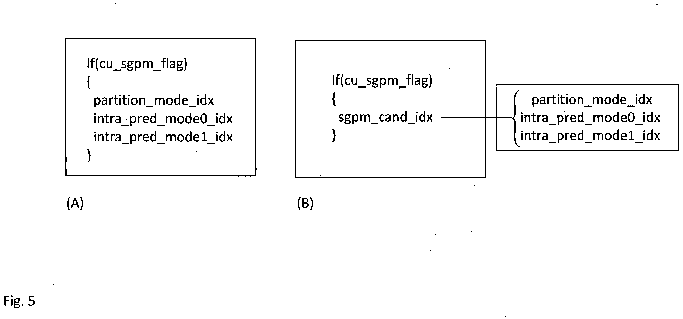

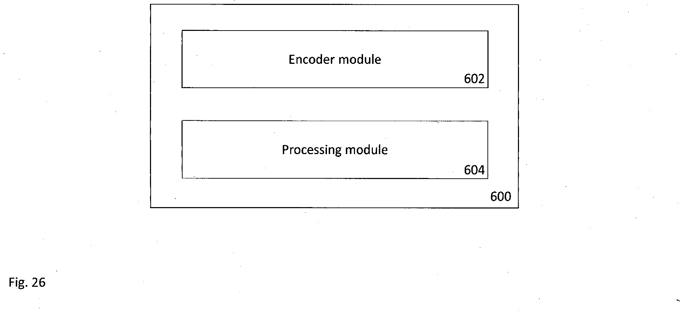

SGPM is an intra mode that resembles the inter coding tool of the Geometric Partitioning Mode (GPM), where the two prediction parts are generated from an intra predicted process. In this mode, a candidate list is built with each entry containing one partition split and two intra prediction modes. Fig. 3 illustrates an SGPM block 200 being split into partition 0 and partition 1 according to certain partition mode. Each partition has associated there with a prediction mode, like the IPM intra_pred_mode0 for partition 0, and the IPM intra_pred_mode1 for partition 1. Among a plurality of partition modes illustrated in Fig. 4, 26 partition modes may be used for SGPM (see the modes surrounded by the squares), namely partition modes 0, 1, 6, 8, 10, 12, 14, 16, 18, 19, 20, 22, 24, 26, 28, 30, 36, 37, 42, 43, 48, 50, 51, 53, 56, 59. The 26 partition modes and 3 of intra prediction modes are used to form the candidate list of combinations. The length of the candidate list may be set 16, and the selected candidate index is signaled. Fig. 5(A) and Fig. 5(B) illustrate the signaling the partition split and the two intra prediction modes for a SGPM block. When SGPM is used for processing a current block or CU, the flag cu_sgpm_flag is set, e.g., in a data stream or bitstream. As is illustrated in the example of Fig. 5(A), responsive to the flag cu_sgpm_flag being set, the partition mode partition_mode_idx, the IPM intra_pred_mode0 for partition 0, and the IPM intra_pred_mode1 for partition 1 are signaled for the SGPM block 200. In the example of Fig. 5(B), responsive to the flag cu_sgpm_flag being set, rather than signaling the partition mode partition_mode_idx, the IPM intra_pred_mode0 for partition 0, and the IPM intra_pred_mode1 for partition 1 are signaled, a selected index spqm_cand_idx of the candidate list is signaled. The indexed candidate list entry holds for the SGPM block 200 the partition mode partition_mode_idx, the IPM intra_pred_mode0 for partition 0, and the IPM intra_pred_mode1 for partition 1.

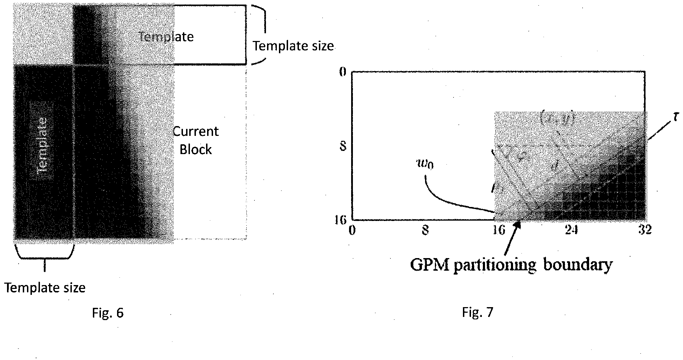

The candidate list may be reordered using a template (see Fig. 6) where a Sum of Absolute Difference (SAD) between the prediction and reconstruction of the template is used for ordering. The template size may be fixed to 1.

For each partition mode, an IPM list is derived for each part using the same intra-inter GPM list derivation. The IPM list size is set to 3. In the list, a template-based intra mode derivation (TIMD) derived mode is replaced by 2 derived modes with horizontal and vertical orientations. The list may be further augmented with block-vector based prediction candidates obtained from the adjacent and non-adjacent merge candidates coded in intra template matching prediction (IntraTMP) or in intra block copy (IBC) prediction mode. The template cost is employed to select the up to 6 block vectors. The final list contains up to 9 predictors: 3 regular intra modes and up to 6 block vectors-based predictors.

The SGPM mode may be applied with a restricted blocks size: 4<=width<=64, 4<=height<=64, width<height*8, height<width*8, width*height>=32.

A Picture Parameter Set (PPS) flag may be coded to indicate whether no blending of two intra predictions is allowed. When the PPS flag is set to false, the following adaptive blending is also used for spatial GPM, with the blending depth τ shown in Fig. 7 being derived as follows:
- If min(width, height)=4, ½ τ is selected
- else if min(width, height)==8, τ is selected
- else if min(width, height)==16, 2 τ is selected
- else if min(width, height)==32, 4 τ is selected
- else, 8 τ is selected.

Otherwise (the PPS flag is set to true), ¼ τ is always used for spatial GPM coded blocks to make sure no blending is used when SGPM block has partition angle completely horizontal or vertical, and much narrower blending width is used when SGPM block has other partition angles. It is noted that the flag is set to true in current Common Test Conditions (CTC) for the screen content videos.

### Decoder side intra mode derivation (DIMD)

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination $Orient = {G}_{y} / {G}_{x} .$ is obtained, e.g., computed by the following LUT-based scheme: $x = Floor \left(Log2\left(Gx\right)\right)$ $normDiff \left(\left(Gx≪4\right)≫x\right) & 15$ $x + = \left(3+\left(normDiff !=0\right) ? 1 : 0\right)$ $Orient = \left(Gy*\left(DivSigTable\left[normDiff\right]\left|8\right.\right)+\left(1≪\left(x-1\right)\right)\right) ≫ x$ where $DivSigTable \left[16\right] = \left\{0, 7, 6, 5, 5, 4, 4, 3, 3, 2, 2, 1, 1, 1, 1, 0\right\} .$

For a block of size *W* × *H,* the weight for each of the five derived modes is modified if one of the above or left histogram magnitudes is twice as large as the other one. In this case, the weights are location dependent and computed as follows:
If the above histogram is twice the left, then: ${w}_{i} \left(x, y\right) = {wDimd}_{i} + {Δ}_{i} - 2 {Δ}_{i} \frac{y}{\left(H-1\right)} .$
If the left histogram is twice the above, then: ${w}_{i} \left(x, y\right) = {wDimd}_{i} + {Δ}_{i} - 2 {Δ}_{i} \frac{x}{\left(W-1\right)} ,$
where *wDimdᵢ* is the unmodified uniform weight of the DIMD selected as in JVET-O0449, Δ*ᵢ* is pre-defined and set to 10.

The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.

Finally, it is noted note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

### Occurrence-based intra coding (OBIC)

The occurrence-based intra coding (OBIC), proposed in JVET-AH0076, derives the intra prediction modes of the current block based on the sample-wise occurrence of the intra modes in the spatial neighborhood of the block. For this, adjacent and non-adjacent spatial neighboring blocks are checked and the intra prediction modes of the blocks are collected into an occurrence histogram. Instead of a Histogram of Gradients (HoGs) as in DIMD, the OBIC method uses a Histogram of Occurrences, which consists of the intra modes and their sample-wise occurrences. The occurrence values are calculated based on the number of samples that are coded in a certain intra prediction mode in that neighborhood. For example, if a uiWidth × uiHeight block is coded with an IPM mode, the occurrence of the mode in that block is calculated as: $Histogram \left[IPM\right] + = uiWidth \times uiHeight ;$ where uiWidth and uiHeight are the width and height of a spatial neighboring block.

The occurrences of the existing modes from the spatial neighborhood blocks are accumulated into the histogram.

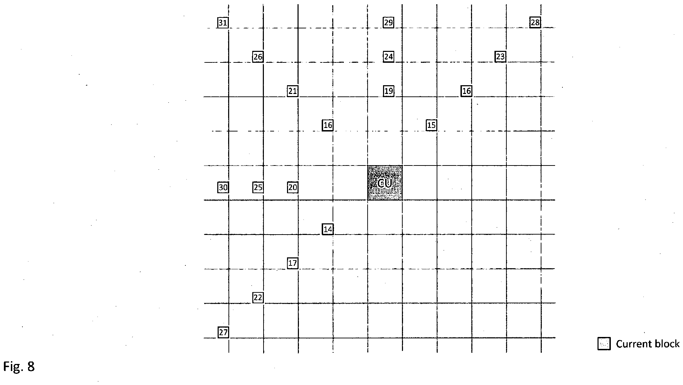

Fig. 8 illustrates non-adjacent spatial neighboring blocks that are used in the OBIC mode's histogram generation. Up to five angular modes with the highest occurrence along with the planar mode or block vector-based prediction (same as in DIMD) are selected from the histogram and used for a final prediction by blending the prediction of the selected modes.

Some blocks, mentioned below, use more than one intra mode for prediction. In such cases, all the intra modes of such blocks are selected and used when creating the OBIC histogram:
- DIMD: up to 5 angular modes
- TIMD: up to 2 modes
- SGPM: 2 modes
- OBIC: up to 5 angular modes

Moreover, the virtual intra prediction modes (VIPMs) of the following blocks are considered only in inter slices when creating the histogram of the OBIC mode:
- MIP block
- IntraTMP block
- EIP block

The blending weights are calculated similar to the DIMD mode, but instead of using gradient values from the template, the occurrence values are used for the OBIC. Moreover, the planar mode's weight is also decided similar to DIMD mode.

The OBIC mode is used as a sub-mode of the DIMD tool and is applied only to luma blocks. Moreover, the mode is disabled for blocks that have less than 64 samples.

### Fusion for template-based intra mode derivation (TIMD)

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e., DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:
- The non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost: ${weight}_{i} = \frac{sumSATD - {costMode}_{i}}{2 \times sumSATD} , sumSATD = {\sum }_{j = 1}^{3} {costMode}_{i} .$ Otherwise, the non-angular intra prediction mode is not used in the prediction.

The costs of the two selected modes are compared with a threshold, and the cost factor of 2 may be applied as follows: $costMode 2 < 2 * costMode 1 .$ If this condition is true, the fusion is applied, otherwise only mode1 is used.

The weights of the modes are computed from their SATD costs as follows: $weight 1 = costMode 2 / \left(costMode1+costMode2\right)$ $weight 2 = 1 - weight 1$

The division operations are conducted using the same lookup table (LUT) based integerization scheme used by the CCLM.

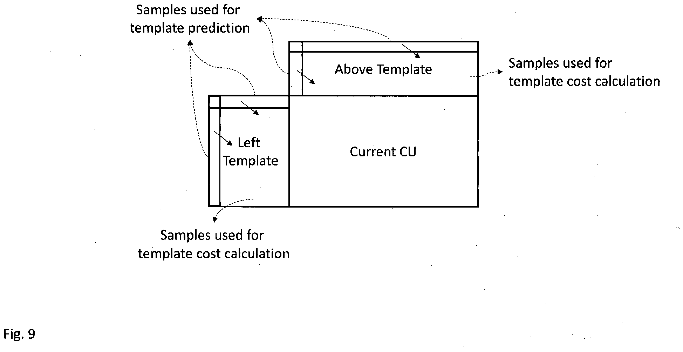

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 9 illustrating the TIMD templates for the cost determination or calculation.

### Template-based multiple reference line intra prediction

The template-based multiple reference line intra prediction (TMRL) mode combines reference line and prediction mode together and uses a template matching method to construct a list of candidate combinations. An index to the candidate combination list is coded to indicate which reference line and prediction mode is used in coding the current block.

The TMRL mode extends the reference line candidate list and the intra-prediction-mode candidate list. The extended reference line candidate list is {1, 3, 5, 7, 12}. The restriction on the top CTU row is unchanged. The size of the intra-prediction-mode candidate list is 10. The construction of the intra-prediction-mode candidate list is similar to MPM except the Planar mode is excluded from the intra-prediction-mode candidate list, DC mode is added after 5 neighboring PUs' modes and DIMD modes if it's not included and the angular modes with delta angles from ±1 to ±4 (compared the existing angular modes in the intra-prediction-mode candidate list) are added. The precision of angular prediction is extended from 65 to 129. Additionally non-adjacent positions are added as candidates in constructing the intra candidate list. If the neighboring or non-adjacent blocks are coded with SGPM (Spatial Geometric Partition Mode)or GPM (Geometric Partitioning Mode), the intra modes of the blocks are replaced by the partitioning angles.

The TMRL candidate is constructed as follows. There are 5x10=50 combinations of the extended reference line and the allowed intra-prediction modes for a block. Since the extended reference line starts from reference line 1, the area covered by reference line 0 is used for template matching. The SAD costs over the template area are calculated between the predictions (generated by 50 combinations) and the reconstructions. The 20 combinations with the least SAD cost are selected in an ascending order to form the TMRL candidate list.

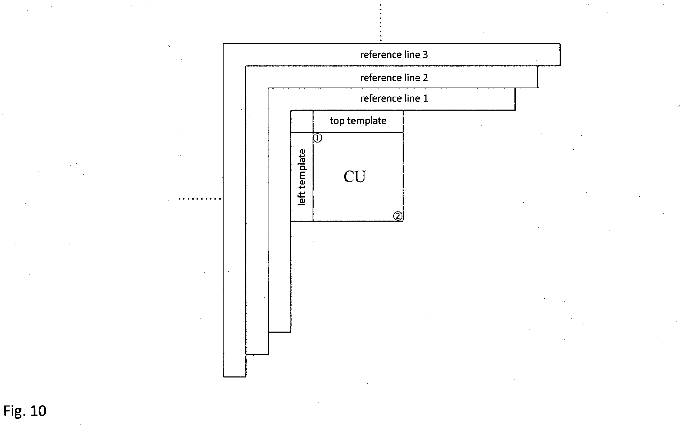

Fig. 10 illustrates the template area for the TMRL mode. Regarding TMRL signaling, instead of coding the reference line and the intra mode directly, an index to the TMRL candidate list is coded to indicate which combination of reference line and prediction mode is used for coding the current block.

### Chroma TMRL

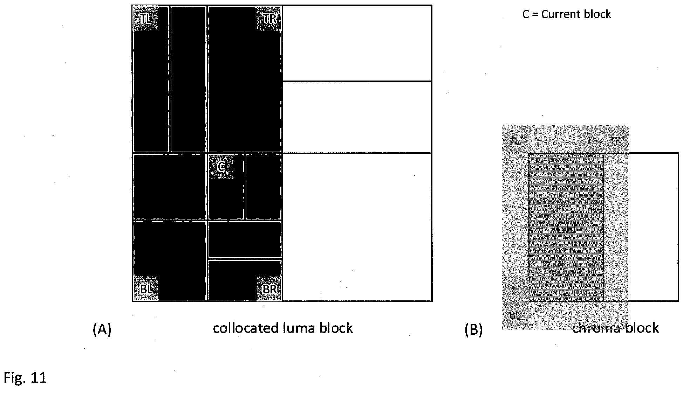

For the chroma TMRL mode reference lines 1, 3, 5 and 8 intra prediction mode candidates are used, with a total of 3x8=24 combinations, and the intra mode candidates are derived as follows:
- The non-Cross-Component Prediction (non-CCP) chroma intra prediction modes in the current ECM including directional mode (DM), chroma DIMD, DC;
- The collocated luma modes: the intra prediction modes from luma blocks in the positions of TL, TR, BL and BR in the collocated luma block. Fig. 11(A) illustrates the collocated luma block as well as the mentioned positions of top left (TL), top right (TR), bottom left (BL) and bottom right (BR);
- The adjacent chroma modes: the intra prediction modes from adjacent chroma blocks in the positions of L', T', BL', TR', and TL'. Fig. 11(B) illustrates the adjacent chroma block as well as the mentioned positions of left (L'), top (T'), bottom left (BL'), top left (TL') and top right (TR).

Some default intra modes are added if the intra-prediction-mode candidate list is not filled fully with the above chroma modes. The default intra modes are the first angular mode in the intra-prediction-mode candidate list shifted with {-1, +1, -2, +2, ...}. To remove redundant intra prediction mode in the list, a pruning operation is applied. It is noted that the CCP mode, the planar mode, and the Direct Block Vector (DBV) mode are excluded from the intra-prediction-mode candidate list.

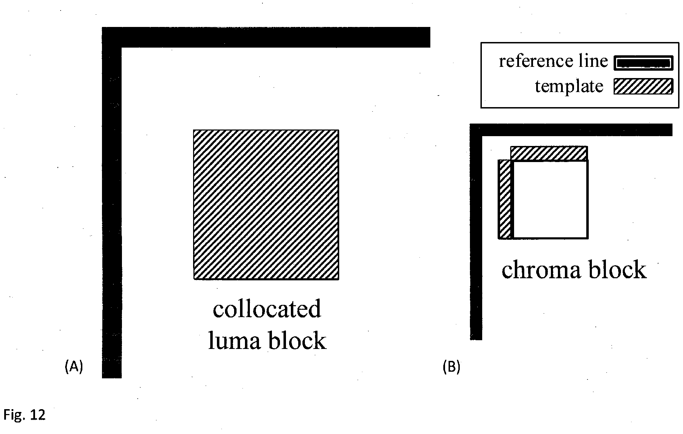

Combination candidates from the list are used to predict the collocated luma block and the template of the current chroma block. This template includes one top row and one left column of the current chroma block as shown in Fig. 12(A)-Fig. 12(B) illustrating the template areas of a collocated luma block and an adjacent chroma block used in chroma TMRL. The SATD cost between the prediction and the reconstructed samples is then calculated or determined for the collocated luma block and chroma templates. The candidates in the list are reordered based on a combined SATD cost, with the cost determined or calculated as follows: $\begin{matrix}cost = 8 ∗ costY + \left({costCb}_{Top}+{costCr}_{Top}\right) \\ ≪ \left(logH+2\right) + \left({costCb}_{Left}+{costCr}_{Left}\right) ≪ \left(logW+2\right)\end{matrix}$

The first 6 combination candidates with the smallest cost are used.

A chroma TMRL flag may be signaled to indicate whether the chroma TMRL mode is applied or not. If the chroma TMRL mode is applied, an index is signaled to indicate which combination candidate in the list is used.

### Angular Intra Prediction Mode (IPM) in VVC and ECM

A set of 67 Intra Prediction Modes (IPMs) exists both in VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,...,-1 and 67,68,...,80), depending on block characteristics such as width/height ratio.

The angular intra prediction modes may be signaled through a Most Probable Mode (MPM) list and a non-MPM list.

### Most Probable Mode (MPM) and non-MPM lists

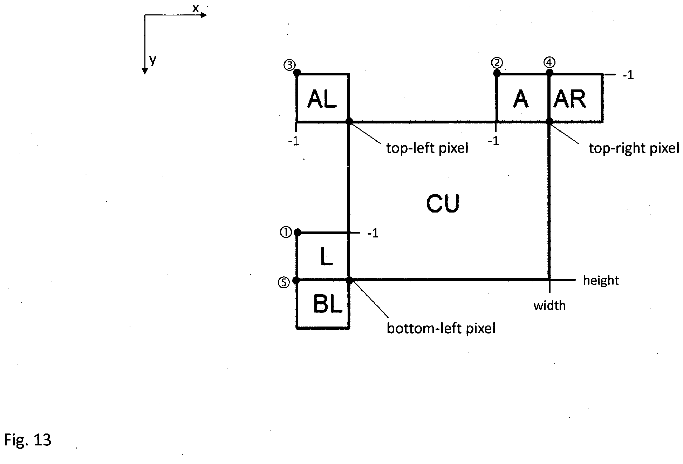

An MPM list may include a primary MPM (PMPM) list comprising 6 entries and a secondary MPM (SMPM) list, as described in JVET-D01 14, including 16 entries. A general MPM list with 22 entries is constructed first, and then the first 6 entries in this general MPM list are included into the PMPM list, and the rest of entries of the general MPM list form the SMPM list. The first entry in the general MPM list is the Planar mode. The remaining entries are composed of the intra modes of the left (L), above (A), below-left (BL), above-right (AR), and above-left (AL) neighboring blocks of a currently processed or predicted block and DIMD modes which are sorted in ascending order of Sum of Absolute Difference (SAD) cost. Fig. 13 illustrates for a currently processed block CU the neighboring blocks L, A, BL, AR, AL used in the derivation of the general MPM list. Up to 5 modes with the smallest SAD cost are added. The SAD cost is computed between the prediction and the reconstruction samples of the template. The sorted directional modes with added offset are added into the general MPM list, and then the default modes, until the general MPM list with 22 entries is constructed.

In the present disclosure, the terms left (L), above (A), above-left (AL), above-right (AR) and below-left (BL) are defined as position based on the current block position. The position of the current block is depicted in x, y coordinates with respect to the position of the first pixel, the top-left pixel of the current block, from the current block within the picture. Based on that x, y position of the top-left pixel, offsets are computed to obtain the positions ① to ⑤ of the reconstructed blocks L, A, AL, AR and BL. As may be seen, the reconstructed blocks L, A, AL, AR and BL are all adjacent or abutting respective corners of the currently processed block, more specifically, corners corresponding to the top-left pixel position, the top-right pixel position and the bottom-left pixel position. Relative to the x, y position of the top-left pixel, the offsets of the positions ① to ⑤ are as follows:
①: (-1, height - 1),
②: (width - 1, -1),
③: (-1, -1),
④ (width, -1),
⑤: (-1, height).
The blocks within these pixel positions are considered as L, A, AL, AR and BL neighboring or adjacent blocks.

If a CU block is vertically oriented, the order of neighboring blocks is A, L, BL, AR, AL; otherwise, it is L, A, BL, AR, AL.

The MPM list is equally divided into four groups and the group index is parsed first. Then, a mode index is further parsed to indicate which mode in the selected group is used.

### Transform Skip (TS)

Transform Skip (TS) is a technique used in video coding standards, like HEVC and VVC, to improve compression efficiency by skipping the transform stage for certain prediction modes. In traditional video coding, each block of pixels undergoes a transform operation (e.g. DCT) before quantization and entropy coding. However, in TS mode, the transform stage, like transformer 116 in Fig. 1, is bypassed for specific prediction modes, allowing the encoder to directly quantize the residual signal 110 without transformation. This approach is beneficial for blocks where the residual signal after prediction is small or close to zero, as applying a transform may not yield significant compression gains and may introduce unnecessary computational overhead. By skipping the transform, the encoder may reduce complexity and bitrate overhead associated with the transform stage, leading to improved compression efficiency, especially in scenarios with low residual energy or when the residual signal is already well-predicted by the motion compensation process. However, it's worth noting that the decision to apply TS mode is usually adaptive and depends on the characteristics of the block and the coding context determined by the encoder.

As described above, fusion methods, e.g., intra fusion methods, such as DIMD, TIMD and OBIC, fuse a fixed amount of predictions in order to obtain the final block prediction. While such blending methods work well for complex texture characteristics, such as natural or camera captured content, it has been found that such blending mechanisms may not be optimal when used for content with simple texture characteristics (e.g. sharp edges), such as screen content. Thus, such methods either are not used (e.g., may be fully disabled or not selected by a rate-distortion optimization of an encoder), or provide sub-optimal prediction performance. Stated differently, state of the art fusion-based prediction processes are configured to only fuse a fixed number of prediction modes without taking into consideration local characteristics of the block or picture so that when using them, e.g., for content with simple texture characteristics, such as screen content, the prediction performance is sub-optimal.

In other words, a state-of-the-art fusion-based prediction tool may blend a specific number of prediction modes to improve prediction accuracy of a block of a picture, however, the specific number of prediction modes to be blended is fixed, i.e., there is only one configuration of the process. This approach may not always yield optimal results, particularly in cases involving content with simple textures, such as screen content, because local characteristics are not taken into account. Therefore, the fusion-based prediction process is not used at all or the non-optimal results have to be accepted.

For addressing these shortcomings, it has been found that using less than all available prediction modes addresses the limitations in prior art approaches. Therefore, in accordance with embodiments, more than one configuration for a fusion-based prediction process are provided, e.g., three configurations, which configure the amount of blending employed by a fusion-based prediction tool. Stated differently, embodiments of the present disclosure address the above shortcomings by predicting a current block using a fusion-based prediction process configured according to one of a plurality of configurations for one or more fusion-based prediction processes, thereby refining a degree of fusion or blending of prediction modes, and thus improving a prediction performance of these fusion-based prediction processes. In accordance with embodiments, the fusion-based prediction processes may be DIMD, TIMD and OBIC, or a fusion using block-vector based (BV-based) predictions such as an intra template matching prediction (IntraTMP) or an intra block copy (IBC) prediction.

Embodiments of the present disclosure propose to define a plurality of configurations for the fusion-based prediction processes and to select the appropriate one based on predefined features. In accordance with embodiments, the predefined features are based on information about the neighborhood or neighboring blocks of a currently processed block, e.g., information about how the neighboring blocks were processed. For example, the configuration may be selected dependent on a number of neighboring blocks that were processed using transform skip. In accordance with other embodiments, the predefined features are based on the samples already reconstructed for the neighboring blocks. Various embodiments of the present disclosure propose to select a configuration for fusion-based prediction processes, such as SGPM, DIMD, TIMD and OBIC, TMRL/Chroma TMRL, in order to better match the tools with the local characteristics. In accordance with embodiments, three configurations are proposed, a simple, an intermediate and a full configuration which allow fusion-based prediction tools to go from no blending to the state-of-the-art blending method.

Embodiments of the present disclosure are advantageous as they allow a fine-tuning of fusion-based prediction processes to better account for local characteristics of the block or picture, thereby exploiting the benefits of the fusion-based fusion methods, i.e., providing a better prediction accuracy, thereby avoiding a sub-optimal prediction performance.

In the present disclosure, the term fusion-based prediction or fusion-based prediction process refers to methods that obtain a prediction for a block based on blending or fusing two or more prediction signals. In accordance with embodiments, a fusion-based prediction process may be a fusion-based intra prediction process, such as a decoder side intra mode derivation (DIMD), a template-based intra mode derivation (TIMD), or an occurrence-based intra coding (OBIC). In accordance with other embodiments, a fusion-based prediction process may be a refer to a fusion of block vector-based (BV-based) predictions, such as an intra template matching prediction (IntraTMP) or an intra block copy (IBC) prediction.

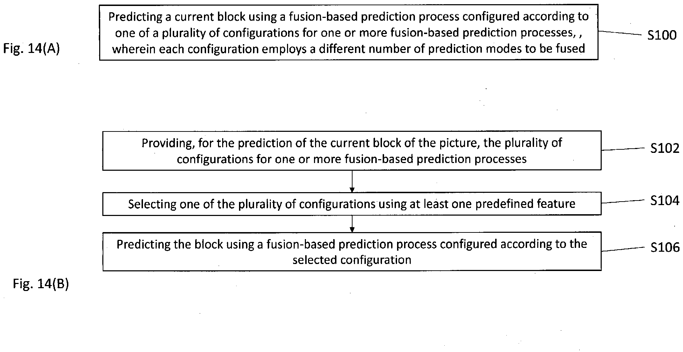

Fig. 14(A) illustrates a flow diagram of an embodiment of a method of processing one or more blocks of a picture. The method includes:

| | |
|---|---|
| S100: | Predicting a current block using a fusion-based prediction process configured according to one of a plurality of configurations for one or more fusion-based prediction processes, wherein each configuration employs a different number of prediction modes to be fused. |

Fig. 14(B) illustrates a flow diagram of an embodiment of a method of predicting one or more blocks of a picture. The method includes:

| | |
|---|---|
| S102: | Providing, for the prediction of the current block of the picture, the plurality of configurations for the one or more fusion-based prediction processes. |
| S104: | Selecting one of the plurality of configurations using at least one predefined feature. |
| S106: | Predicting the block using a fusion-based prediction process configured according to the selected configuration. |

In accordance with embodiments, a simple, an intermediate and a full configuration are proposed for fusion-based prediction tools. The simple and intermediate configurations are declinations of the fusion-based prediction tools with a lower number of blended predictions used whereas the full configuration refers to the existing state-of-the-art fusion-based prediction.

In accordance with embodiments, three configurations are disclosed, however, the present disclosure is not limited to such embodiments, i.e., there may be more than three configurations. In one embodiment, the plurality of configurations comprise a simple, a full and at least two intermediate configurations, wherein each configuration employs a different number of prediction modes to be fused. In accordance with embodiments, as many intermediate configurations as there are prediction modes may be defined between a simple configuration (using only one of the prediction modes) and a full configuration (using all or a predefined number of prediction modes, like the N best prediction modes).

In accordance with embodiments, the configurations are used either by one fusion-based prediction tools or by multiple fusion-based prediction tools.

In accordance with embodiments, only a sub-set of the configurations may be used.

In accordance with embodiments, one or more features are defined to select the appropriate configuration.

In accordance with embodiments, the one or more features may be derived from signaled information about neighboring blocks of a currently processed block, such as transform information or mode information.

In accordance with embodiments, the transform information comprises a transform skip flag, a coded block flag or a sub-block transform flag, and the mode information may indicate a prediction mode.

In accordance with embodiments, the one or more features are derived in relation with reconstructed samples from one or more of the neighboring blocks.

In accordance with embodiments, a feature is compared to several thresholds in order to determine or select the appropriate configuration.

In accordance with embodiments, a combination of features is combined and compared to several thresholds in order to determine the appropriate configuration. In accordance with embodiments, there may as many thresholds as number of configuration - 1.

In accordance with embodiments, the configurations or a sub-set of the configurations is either signaled using an index or a flag. The selected configuration may be decided at the encoder side.

In accordance with embodiments, for each configuration a different context may be defined for each fusion-based prediction tools, e.g., in case the selection of the configuration is based on the signaled information.

Embodiments of the present disclosure are now described with reference to fusion-based intra prediction processes or methods using multiple intra prediction modes (IPMs), such as DIMD and TIMD, however, the present disclosure is not limited to such embodiments. In accordance with other embodiments, other fusion-based prediction methods may be employed, e.g., a fusion of multiple block-vector based predictions, such as fusion of multiple intraTMP or IBC predictions.

In accordance with embodiments, three configurations are provided, a simple configuration, an intermediate configuration and a full configuration. The full configuration refers to the existing state-of-the-art fusion-based prediction in which the tool may blend N predictions, like the N best predictions, to obtain a final block prediction. The simple configuration of a fusion-based prediction tool is predicting the block with a single prediction, like an IPM, which is selected by the corresponding method as the best one. For instance, for DIMD the best IPM is the one with the highest HoG amplitude. The intermediate configuration of a fusion-based prediction tool is selecting a subset of predictions, like IPMs, (e.g., M predictions in which M < N) and blending them to perform the prediction.

The configurations provided by the inventive approach are selected using one or more features such as transform information or sample information from neighboring blocks in a block-level decision. For example, one of the features is that a transform skip is applied on neighboring blocks. Comparing the one or more features to a threshold determines the configuration to be used for the fusion-based prediction process.

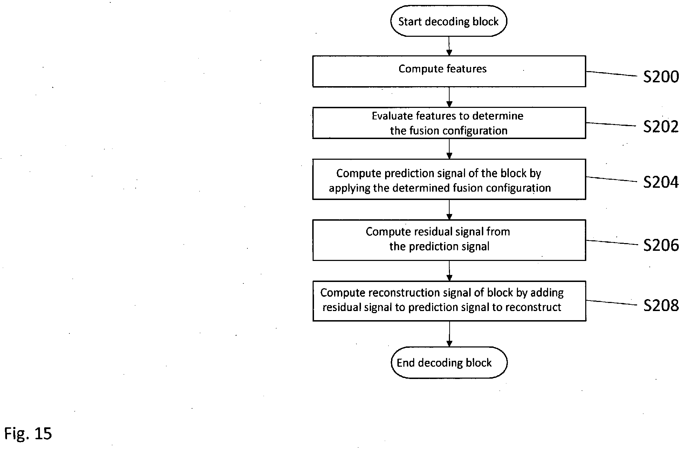

Fig. 15 illustrates a method for decoding a block according to an embodiment of the present disclosure. The method is illustrated in a high-level view, showing common aspects of the proposed methods for processing a current block of a picture. As is shown, first the one or more features are determined or computed S200. Then the one or more features are evaluated S202 to determine a fusion configuration, i.e., dependent on the one or more features one configuration out of a plurality of configurations is selected. The prediction signal of the block is determined or computed S204 by applying the determined fusion configuration, i.e., the selected configuration is used to configure a fusion-based prediction process. A residual signal is determined or computed S206 from the prediction signal and lastly a reconstruction signal of the block is determined or computed S208 by adding the residual signal to the prediction signal to reconstruct.

### Configuration of fusion-based prediction tools

In accordance with embodiments, three configurations for fusion-based prediction tools are proposed to better match the content, namely a simple configuration, an intermediate configuration and a full configuration. The simple, intermediate and full configurations are now described using DIMD as an example of a fusion-based prediction process. However, the present disclosure is not limited to such embodiments. In accordance with other embodiments, the principle as shown may be applied to all fusion-based prediction processes. Furthermore, the configuration may be applied from one to all fusion-based prediction processes.

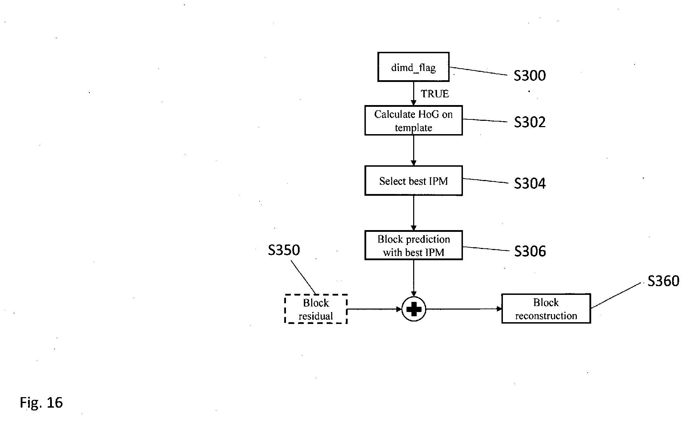

Fig. 16 to Fig. 18 illustrate the DIMD fusion-based prediction processes in accordance with the above-mentioned three configurations. One of the three configurations is selected based on the above-mentioned one or more features to better match the content. The one or more features may be obtained from signaled information about one or more neighboring blocks or from samples of the one or more neighboring blocks.

Fig. 16 illustrates a first configuration in accordance with embodiments of the present disclosure. The first configuration, which is also referred to as simple configuration throughout the present disclosure, is limiting the fusion-based prediction process to the prediction of only one prediction mode. For instance, when using DIMD, this is signaled S300 using *dimd_flag.* If *dimd_flag* is true, the HoG amplitude is calculated or determined S302 using a template, and the intra prediction mode (IPM) with the highest Histogram of Gradients (HoG) amplitude is selected S304 as being the best IPM. At S306 the best IPM is used for the block prediction without any blending. The thus computed block prediction is added to the block residual S350 to determine or compute S360 the block reconstruction.

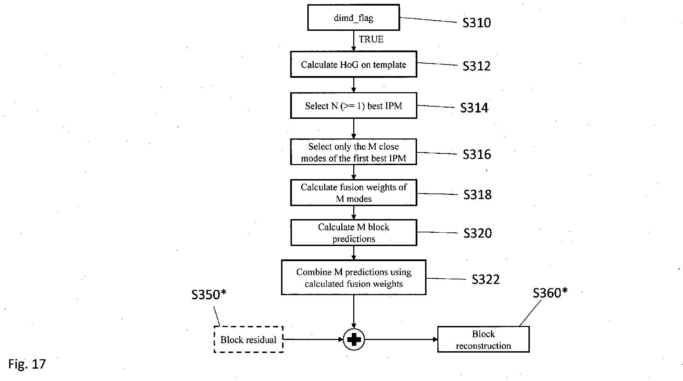

Fig. 17 illustrates a second configuration in accordance with embodiments of the present disclosure. The second configuration, which is also referred to as intermediate configuration throughout the present disclosure, is modifying the fusion-based processes to the prediction of only a sub-set (M) of all of the selected prediction modes in the state-of-the-art. For instance, with DIMD, instead of blending the N best IPM predictions plus the non-angular prediction, the blending is performed only on the sub-set of M of those N+1 IPMs. When using DIMD, this is signaled S310 using *dimd_flag.* If *dimd_flag* is true, the HoG amplitude is calculated or determined S312 using a template, and the N (>= 1) best IPMs are selected S314 using the HoG amplitude. Then, M IPMs with M≤N are selected S316, e.g., based on the distance between the best IPM, i.e., the one with the highest HoG amplitude, and the other N-1 IPMs. Comparing the difference between the best IPM and the other N-1 IPMs determines if the IPM is included within the M IPMs to be blended. Then, the weights of the M IPMs are determined or computed S318 as well as the M IPM predictions S320, and the blending is performed S322 using the weights without the non-angular prediction. The thus computed block prediction is added to the block residual S350* to compute the block reconstruction S360*.

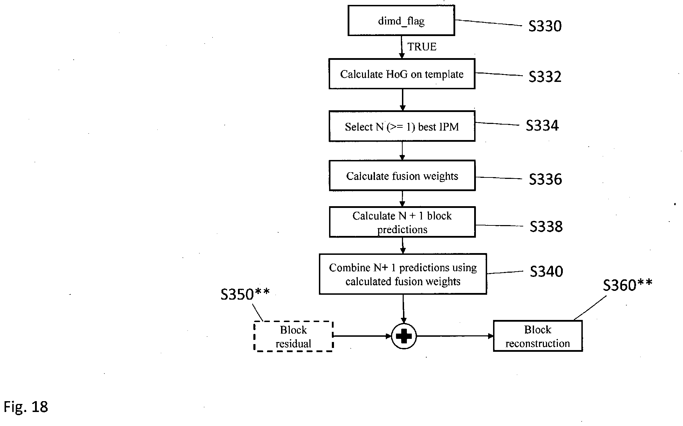

Fig. 18 illustrates a third configuration in accordance with embodiments of the present disclosure. The third configuration, which is also referred to as full configuration throughout the present disclosure, is the fusion-based prediction process computed as defined as in the state-of-the-art. As in the previous examples, the fusion-based prediction process DIMD is used, which is indicated at S330 with a *dimd_flag.* If true, the HoG amplitude is calculated or determined S332 and the N (>= 1) best IPMs are selected S334. Then, the weights are computed S336 as well as the N+1 IPM predictions S338, including the N best IPMs as well as the non-angular prediction. After that the blending is performed S340, fusing the N IPM predictions using the weights plus the non-angular prediction. The thus computed block prediction is added to the block residual S350** to compute the block reconstruction S360**.

### Features to decide on the appropriate configuration to use

In accordance with embodiments, in order to decide which configuration of the fusion-based prediction process is the more appropriate, one or more features are defined and used either alone or in combination. The one or more features are either based on signaled information or on reconstructed samples from one or more neighboring blocks.

### Signaled information

In accordance with embodiments, the signaled information of the neighboring blocks includes transform coding information or intra mode information.

In accordance with embodiments, the transform information indicates whether or not a certain transform has been applied to a neighboring block, e.g., using a flag. In accordance with embodiments, a transform skip (TS) flag, a coded block flag (CBF), a sub-block transform (SBT) flag, etc. may be used as a feature for selecting a configuration of the fusion-based prediction process. For example, the TS flag is signaled to indicate that the residuals of a block are not coded with any transform. The coded block flag indicates whether a block contains non-zero transform coefficients after quantization. The sub-block transform flag indicates a coding of only a sub-part of the residual block.

In accordance with embodiments, the intra mode information indicates a type or category of prediction performed for a neighboring block by a specific intra mode. In accordance with embodiments, a number of coded blocks in each category that are located in the causal neighborhood of the current block are determined, e.g., counted, and the count is used as a feature for selecting a configuration of the fusion-based prediction process. In one embodiment, the neighboring blocks are divided into two types or categories: non-fusion-based prediction processes and fusion-based prediction processes. DIMD, TIMD, OBIC or TIMD-merge are examples of fusion-based prediction processes, whereas the rest of the intra coding tools are categorized as non-fusion-based prediction processes. In another embodiment, prediction processes that are designed to predict complex textures such as MIP, EIP or neural network prediction are classified in the same category as the fusion-based prediction processes. In yet another embodiment, BV-based prediction processes such as intraTMP or IBC are classified in the same category as the fusion-based prediction processes.

### Reconstructed samples

In accordance with other embodiments, the features may also be generated from reconstructed samples of the neighboring blocks. The predefined feature may be obtained using one or more properties of prediction modes for the one or more reconstructed samples. For instance, when DIMD is used, one or multiple fusion modes might have a much higher HoG amplitude compared to other fusion modes, and in one embodiment this difference between the HoG amplitude of the blended modes is used as a feature, such as a difference between a first value, like the maximum value, and a second value, like the minimum value. In another embodiment, the number of modes having similar HoG amplitude is used as a feature, such as HoG amplitudes being within a predefined range. In the above embodiments, the difference or the number of similar modes having similar HoG amplitudes may be used as a feature.

### Selection of fusion-based prediction processes configuration

In accordance with embodiments, the features obtained from the signaled information or from the reconstructed samples of the neighboring blocks is exploited to determine the configuration that is used for the one or more fusion-based prediction processes or tools. According to embodiments, the one or more features may be used either as a standalone feature or in combination.

### Standalone feature

In accordance with embodiments, the configuration is selected based on only one feature. This is described in the following using TS as an example. However, the present disclosure is not limited to such embodiments, rather any other feature may be used in the same way to determine the appropriate configuration.

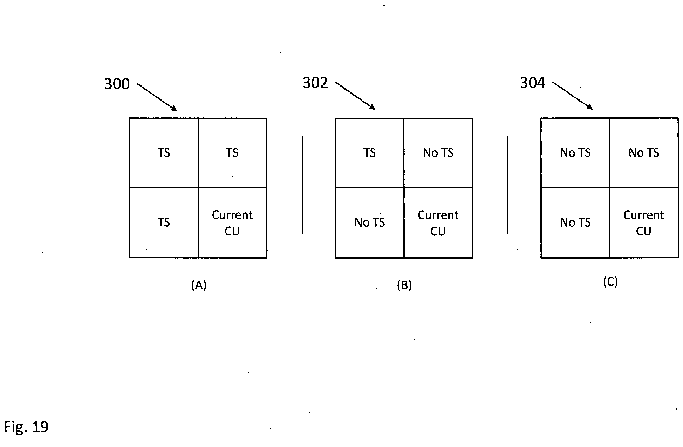

Fig. 19 (A) to Fig. 19(C) illustrate different scenarios using transform information for selecting a configurations for a fusion-based prediction process for a currently processed block, also referred to herein as the current CU. Fig. 19 (A) to Fig. 19(C) illustrate three scenarios 300 to 304 of a current CU and its neighboring blocks being TS coded or not. The scenario 300 depicts a current CU with three neighboring blocks being coded with TS. The scenario 302 depicts a current CU with three neighboring blocks among which one neighboring block is TS coded and the remaining neighboring block are not TS coded. The scenario 304 depicts a current CU with none of the neighboring blocks being TS coded. Dependent of the number of TS coded neighboring blocks, for the current CU a simple, an intermediate or a full configuration of the fusion-based prediction process is selected.

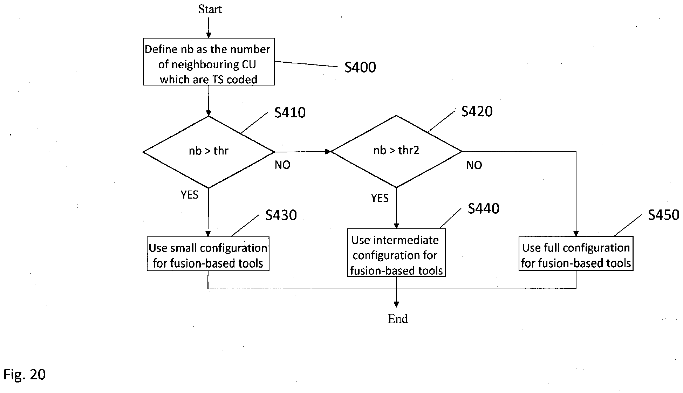

Fig. 20 illustrates an embodiment of a process to determine which of the simple, intermediate or full configuration is selected depending on the number of TS coded blocks in the neighborhood. The number of TS coded blocks in the neighborhood is defined S400 as *nb. nb* is compared to *thr* and *thr2,* which are predefined thresholds, in order to select the appropriate configuration. If *nb* is superior to the threshold *thr* (see S410) then the simple configuration is used S430. If *nb* is not superior to the threshold *thr* but is superior to the threshold *thr2* (see S420) then the intermediate configuration is used S440. Otherwise the full configuration is used S450.

In accordance with embodiments, the neighboring blocks may be the ones at the positions (-1, 0), (0, -1) and (-1, -1) with respect to the current block position, as is shown in Fig. 19 (A) to Fig. 19(C). In accordance with other embodiments, less or more neighboring blocks may be used.

### Combination of features

In another embodiment, the appropriate configuration is selected based on a combination of features. This is described in the following using a combination of TS and intra prediction mode category as an example for two features to be combined. However, the present disclosure is not limited to such embodiments, rather any other features or any other number of features may be used in the same way to determine the appropriate configuration.

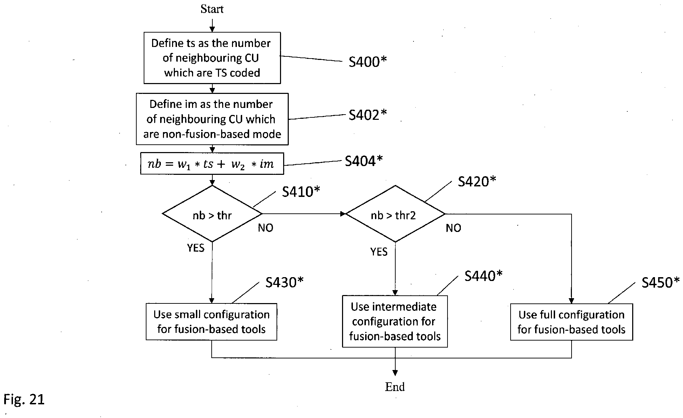

Fig. 21 illustrates an embodiment of a process to determine which of the simple, intermediate or full configuration is selected depending on a combination of features. Compared to Fig. 20, the selection process for the fusion-based prediction process configuration involves two features instead of one. In this example, *t* s and *im* are counts of the number of neighboring blocks which are TS coded and used non-fusion-based prediction processes (see S400* and S402*). In order to decide which configuration to select, a combined feature *nb* is determined or computed S404* based on a weighted sum of *ts* and *im.* Like in Fig. 20, *nb* is compared to *thr* and *thr2* in order to select the appropriate configuration. If *nb* is superior to the threshold *thr* (see S410*) then the simple configuration is used S430*. If *nb* is not superior to the threshold *thr* but is superior to the threshold *thr2* (see S420*) then the intermediate configuration is used S440*. Otherwise the full configuration is used S450*.

### Selection of configuration based on encoder decision

In accordance with embodiments, the configuration may be selected based on an encoder side decision, where the configurations are tested and the configuration to be used is selected, e.g., according to the above-described embodiments. In such embodiments, a syntax element may be provided to determine which configuration is used for the fusion-based prediction processes. In one embodiment, where three configurations are enabled for fusion-based prediction processes, an index is signaled in respect of the configuration, e.g., the simple configuration, the intermediate configuration and the full configuration is signaled using an index 0, 1 and 2. In another embodiment, where only two configurations are used, a flag is signaled in respect of the selected configuration. For both embodiments, a context may be defined in order to signal either the index or the flag.

In accordance with embodiments, multiple contexts may be defined for each fusion-based prediction processes based on the signaling information features such as the configuration selection.

### Decoding Method

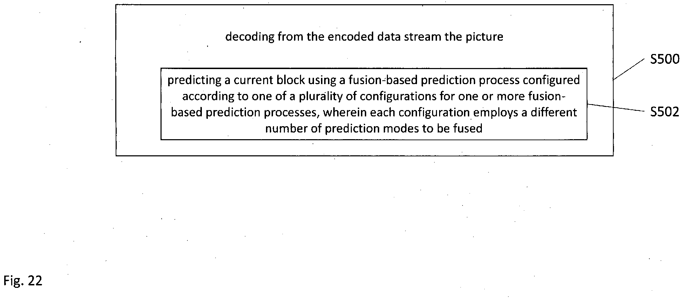

Fig. 22 illustrates a flow diagram of a method for decoding an encoded data stream, the encoded data stream including data representing a picture. The method includes the following:

| | |
|---|---|
| S500: | Decoding from the encoded data stream the picture, wherein decoding the picture comprises predicting S502 a current block using a fusion-based prediction process configured according to one of a plurality of configurations for one or more fusion-based prediction processes, wherein each configuration employs a different number of prediction modes to be fused. |

### Encoding Method

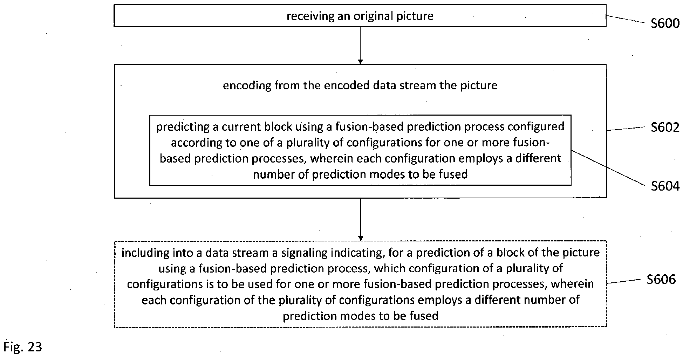

Fig. 23 illustrates a flow diagram of a method for encoding a picture into an encoded data stream. The encoded data stream includes data representing the picture and the method includes the following:

| | |
|---|---|
| S600: | Receiving an original picture. |
| S602: | Encoding the picture into the encoded data stream, wherein encoding the picture comprises predicting S604 a current block using a fusion-based prediction process configured according to one of a plurality of configurations for one or more fusion-based prediction processes, wherein each configuration employs a different number of prediction modes to be fused. |

Optionally, the method comprises including S606 into the data stream or bitstream a signaling indicating, for a prediction of a block of the picture using a fusion-based prediction process, which configuration of a plurality of configurations is to be used for one or more fusion-based prediction processes, wherein each configuration of the plurality of configurations employs a different number of prediction modes to be fused.

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

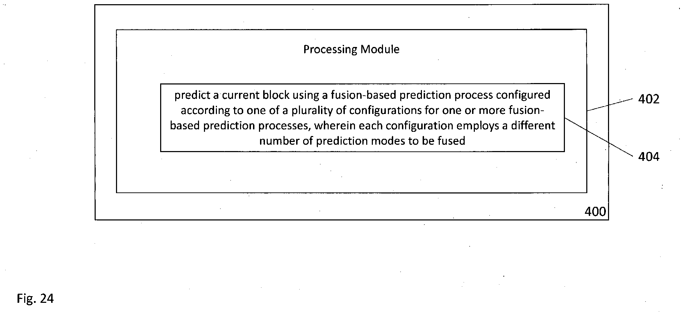

Fig. 24 illustrates a block diagram of an apparatus 400 of predicting one or more blocks of a picture in accordance with embodiments of the present disclosure. The apparatus 400 includes a processing module 402. The processing module 402 is configured to predict 404 a current block using a fusion-based prediction process configured according to one of a plurality of configurations for one or more fusion-based prediction processes, wherein each configuration employs a different number of prediction modes to be fused.

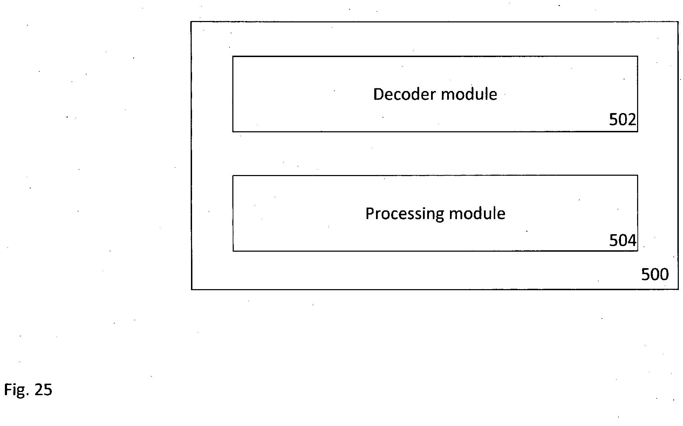

Fig. 25 illustrates a block diagram of a decoder for decoding an encoded data stream in accordance with embodiments of the present disclosure. The encoded data stream includes data representing a picture. The decoder 500 includes the following modules:

| | |
|---|---|
| 502: | A decoder module configured to decode from the encoded data stream the picture. |
| 504: | A processing module, e.g., a prediction module 170 as depicted in Fig. 2. The processing module 502 is configured to operate in accordance with embodiments of the present disclosure. For example, the processing module 502 includes an apparatus as described with reference to Fig. 24. |

Fig. 26 illustrates a block diagram of an encoder for encoding a picture into an encoded data stream in accordance with embodiments of the present disclosure. The encoded data stream includes data representing the picture. The encoder 600 includes the following modules:

| | |
|---|---|
| 602: | An encoder module configured to receive the original picture and to encode the picture into the encoded data stream. |
| 604: | A processing module, e.g., a prediction module 124 as depicted in Fig. 1. The processing module 602 is configured to operate in accordance with embodiments of the present disclosure. For example, the processing module 502 includes an apparatus as described with reference to Fig. 24. |

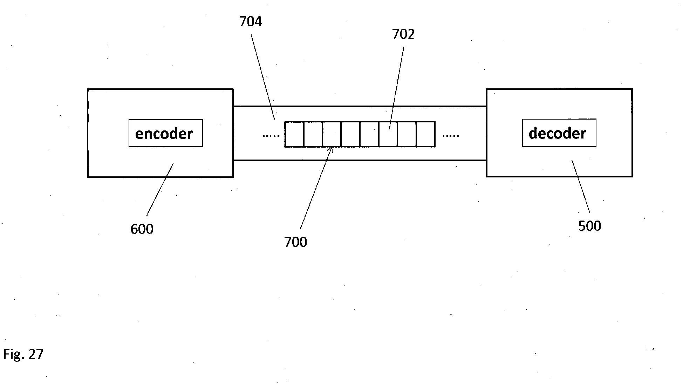

Fig. 27 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 indicating, for a prediction of a block of the picture using a fusion-based prediction process, which configuration of a plurality of configurations is to be used for one or more fusion-based prediction processes, wherein each configuration of the plurality of configurations employs a different number of prediction modes to be fused.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

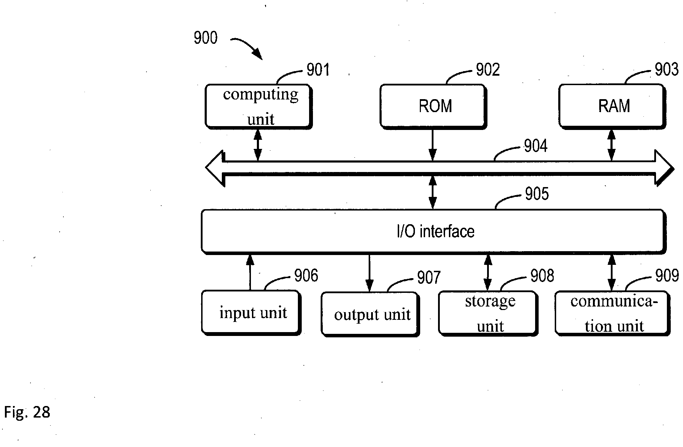

Fig. 28 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 may also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code may be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user may provide an input to the computer. Other types of devices may also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user may interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure may be achieved, and no limitation is imposed herein.

Further embodiments are now described:
A 1^{st} embodiment provides a method of processing one or more blocks of a picture, the method comprising:
   predicting a current block using a fusion-based prediction process configured according to one of a plurality of configurations for one or more fusion-based prediction processes, wherein each configuration employs a different number of prediction modes to be fused.
A 2^{nd} embodiment provides the method of the 1^{st} embodiment, wherein the method comprises:
   providing, for the prediction of the current block of the picture, the plurality of configurations for the one or more fusion-based prediction processes.
A 3^{rd} embodiment provides the method of the 2^{nd} embodiment, wherein the one configuration is selected using at least one predefined feature.
A 4^{th} embodiment provides the method of the 3^{rd} embodiment, wherein the predefined feature is obtained using signaled information about one or more neighboring blocks of the current block.
A 5^{th} embodiment provides the method of the 4^{th} embodiment, wherein the signaled information comprises transform coding information.
A 6^{th} embodiment provides the method of the 5^{th} embodiment, wherein the transform coding information comprises one or more of the following:
   - transform skip information, e.g., a transform skip flag,
   - coded block information, e.g., a coded block flag,
   - sub-block transform information, e.g., a sub-block transform flag.
A 7^{th} embodiment provides the method of any one of the 4^{th} to 6^{th} embodiments, wherein the signaled information comprises intra mode information.
An 8^{th} embodiment provides the method of the 7^{th} embodiment, wherein the intra mode information comprises a prediction type performed on the one or more neighboring blocks.
A 9^{th} embodiment provides the method of the 8^{th} embodiment, wherein the feature is obtained dependent on a number of respective prediction types performed on the one or more neighboring blocks.
A 10^{th} embodiment provides the method of the 9^{th} embodiment, wherein the respective prediction types comprise non-fusion-based prediction tools and/or fusion-based prediction tools.
An 11^{th} embodiment provides the method of any one of the 3^{rd} to 10^{th} embodiments, wherein the predefined feature is obtained using one or more reconstructed samples of one or more neighboring blocks of the current block.
A 12^{th} embodiment provides the method of the 11^{th} embodiments, wherein the predefined feature is based on a difference between the one or more reconstructed samples, e.g., in case of a decoder side intra mode derivation (DIMD), a difference between histogram of gradient (HoG) amplitudes of blended prediction modes, like a difference between a first value, like the maximum value, and a second value, like the minimum value, of the HoG amplitudes.
A 13^{th} embodiment provides the method of the 11^{th} embodiments, wherein the predefined feature is based on a similarity of the one or more reconstructed samples, e.g., in case of a decoder side intra mode derivation (DIMD), a number of blended prediction modes having a similar histogram of gradient (HoG) amplitude, like HoG amplitudes within a predefined range.
A 14^{th} embodiment provides the method of any one of the 3^{rd} to 13^{th} embodiments, wherein, the one configuration is selected using one predefined feature.
A 15^{th} embodiment provides the method of the 14^{th} embodiment, wherein the one configuration is selected dependent on a number of occurrences of the one predefined feature in the one or more neighboring blocks of the current block.
A 16^{th} embodiment provides the method of any one of the 3^{rd} to 13^{th} embodiments, wherein the one configuration is selected using at least two predefined features.
A 17^{th} embodiment provides the method of the 16^{th} embodiment, wherein the one configuration is selected dependent on a number of occurrences of the at least two predefined features in the one or more neighboring blocks of the current block.
An 18^{th} embodiment provides the method of the 17^{th} embodiment, wherein the number of occurrences comprises a first number of occurrences of a first predefined feature and of a second number of occurrences of a second predefined feature in the one or more neighboring blocks of the current block, e.g., a number of transform skip coded neighboring blocks or a number of non-fusion-based predicted neighboring blocks.
A 19^{th} embodiment provides the method of the 17^{th} or 18^{th} embodiment, wherein the number of occurrences of the at least two predefined features are combined by weighting.
A 20^{th} embodiment provides the method of any one of the 15^{th}, 18^{th} or 19^{th} embodiment, wherein a first configuration, having a first amount of prediction modes to be fused, is selected, when the number of occurrences is above a first threshold.
A 21^{st} embodiment provides the method of the 20^{th} embodiments, wherein a second configuration, having a second amount of prediction modes to be fused, is selected, when the number of occurrences is below the first threshold and above a second threshold, wherein the second amount of prediction modes is higher than the first amount.
A 22^{nd} embodiment provides the method of the 21^{st} embodiments, wherein a third configuration, having a third amount of prediction modes to be fused, is selected, when the number of occurrences is below the first threshold and below the second threshold, wherein the third amount is higher than the second amount.
A 23^{rd} embodiment provides the method of any one of the 20^{th} to 22^{nd} embodiments, wherein
   - the first amount comprises only one of the prediction modes of the of the fusion-based prediction process, e.g., a best prediction mode of the N best prediction modes of the fusion-based prediction process,
   - the second amount comprises only a sub-set of the prediction modes of the of the fusion-based prediction process, e.g., only M of the N best prediction modes of the fusion-based prediction process, with M < N.
   - the third amount comprises all of the prediction modes of the of the fusion-based prediction process, e.g., the N best prediction modes of the fusion-based prediction process,.
A 24^{th} embodiment provides the method of any one of the 3^{rd} to 23^{rd} embodiments, wherein the method comprises:
   signaling, e.g., in a data stream, the selected one configuration.
A 25^{th} embodiment provides the method of the 24^{th} embodiments, wherein the signaling uses a syntax element indicating the selected configuration.
A 26^{th} embodiment provides the method of the 25^{th} embodiments, wherein a type of the syntax element is selected dependent on a number of enabled configurations.
A 27^{th} embodiment provides the method of the 26^{th} embodiments, wherein a first syntax element, like an index, is selected for a first number of enabled configurations, and a second syntax element, like a flag, is selected for a second number of enabled configurations.
A 28^{th} embodiment provides the method of the 26^{th} or 27^{th} embodiment, wherein a context for signaling the syntax element is selected dependent on the type of the syntax element.
A 29^{th} embodiment provides the method of any one of the 3^{rd} to 28^{th} embodiments, wherein a context for the one or more fusion-based prediction processes is obtained dependent on the selected configuration.
A 30^{th} embodiment provides the method of any one of the preceding embodiments, wherein all or a sub-set of configurations out of the plurality of configurations for the fusion-based prediction processes are enabled for predicting the block.
A 31^{st} embodiment provides the method of any one of the preceding embodiments, wherein the method comprises:
   - determining a prediction signal of the current block by applying the selected configuration
   - determining a residual signal from the prediction signal
   - determining a reconstruction signal of the current block by adding the residual signal to the prediction signal.
A 32^{nd} embodiment provides the method of any one of the preceding embodiments, wherein the fusion-based prediction process obtains a prediction for the block based on blending or fusing two or more prediction signals.
A 33^{rd} embodiment provides the method of any one of the preceding embodiments, wherein the fusion-based prediction process comprises one or more of the following:
   - a fusion of intra prediction modes (IPMs), e.g., by a decoder side intra mode derivation (DIMD), a template-based intra mode derivation (TIMD) or an occurrence-based intra coding (OBIC),
   - a fusion of block-vector based (BV-based) predictions, e.g., by an intra template matching prediction (IntraTMP) or an intra block copy (IBC) prediction.
A 34^{th} embodiment provides a method for decoding a data stream, the data stream including data representing a picture, the method comprising:
   decoding from the data stream the picture,
   wherein decoding the picture comprises processing one or more blocks of the pictures according to any one of the preceding embodiments.
A 35^{th} embodiment provides a method for encoding a picture into a data stream, the data stream including data representing the picture, the method comprising:
   receiving an original picture, and
   encoding the picture into the data stream,
   wherein encoding the picture comprises processing one or more blocks according to any one of the 1^{st} to 33^{rd} embodiments.
A 36^{th} embodiment provides a non-transitory computer-readable storage medium comprising instructions which, when executed by a computer, cause the computer to carry out the method of any one of the preceding embodiments.
A 37^{th} embodiment provides an apparatus of processing one or more blocks of a picture, the apparatus comprising:
   a processing module, wherein the processing module is configured to predict a current block using a fusion-based prediction process configured according to one of a plurality of configurations for one or more fusion-based prediction processes, wherein each configuration employs a different number of prediction modes to be fused.
A 38^{th} embodiment provides an apparatus for decoding a data stream, the data stream including data representing a picture, the apparatus comprising:
   a decoder module configured to decode from the data stream the picture, and
   an apparatus according to the 37^{th} embodiment.
A 39^{th} embodiment provides an apparatus for encoding a picture into a data stream, the data stream including data representing the picture, the apparatus comprising:
   an encoder module configured to receive the original picture and to encode the picture into the data stream, and
   an apparatus according to the 37^{th} embodiment.
A 40^{th} embodiment provides a data stream having encoded thereinto a picture, wherein the data stream comprises:
   a signaling indicating, for a prediction of a block of the picture using a fusion-based prediction process, which configuration of a plurality of configurations is to be used for one or more fusion-based prediction processes, wherein each configuration of the plurality of configurations employs a different number of prediction modes to be fused.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. A method of processing one or more blocks of a picture, the method comprising:
predicting a current block using a fusion-based prediction process configured according to one of a plurality of configurations for one or more fusion-based prediction processes, wherein each configuration employs a different number of prediction modes to be fused.

2. The method of claim 1, wherein the one configuration is selected using at least one predefined feature.

3. The method of claim 2, wherein the predefined feature is obtained using one or more of the following:
- signaled information about one or more neighboring blocks of the current block,
- one or more reconstructed samples of one or more neighboring blocks of the current block.

4. The method of claim 3, wherein the signaled information comprises one or more of the following:
- transform coding information,
- intra mode information.

5. The method of claim 4, wherein
the transform coding information comprises one or more of the following:
- transform skip information, e.g., a transform skip flag,
- coded block information, e.g., a coded block flag,
- sub-block transform information, e.g., a sub-block transform flag, and
the intra mode information comprises a prediction type performed on the one or more neighboring blocks.

6. The method of claim 4 or 5, wherein the feature is obtained dependent on a number of respective transform codings and/or prediction types performed on the one or more neighboring blocks, the respective prediction types comprising non-fusion-based prediction tools and/or fusion-based prediction tools.

7. The method of any one of claims 2 to 6, wherein the predefined feature is obtained using one or more reconstructed samples of one or more neighboring blocks of the current block.

8. The method of claim 7, wherein the predefined feature is based on
a difference between the one or more reconstructed samples, e.g., in case of a decoder side intra mode derivation (DIMD), a difference between histogram of gradient (HoG) amplitudes of blended prediction modes, like a difference between a first value, like the maximum value, and a second value, like the minimum value, of the HoG amplitudes, or
on a similarity of the one or more reconstructed samples, e.g., in case of a decoder side intra mode derivation (DIMD), a number of blended prediction modes having a similar histogram of gradient (HoG) amplitude, like HoG amplitudes within a predefined range.

9. The method of any one of claims 2 to 8, wherein, the one configuration is selected using one or more predefined features.

10. The method of claim 9, wherein the one configuration is selected dependent on a number of occurrences of the one or more predefined features in the one or more neighboring blocks of the current block.

11. The method of claim 10, wherein
a first configuration, having a first amount of prediction modes to be fused, is selected, when the number of occurrences is above a first threshold,
a second configuration, having a second amount of prediction modes to be fused, is selected, when the number of occurrences is below the first threshold and above a second threshold,
wherein the second amount of prediction modes is higher than the first amount, and
a third configuration, having a third amount of prediction modes to be fused, is selected, when the number of occurrences is below the first threshold and below the second threshold, wherein the third amount is higher than the second amount.

12. The method of claim 11, wherein
- the first amount comprises only one of the prediction modes of the of the fusion-based prediction process, e.g., a best prediction mode of the N best prediction modes of the fusion-based prediction process,
- the second amount comprises only a sub-set of the prediction modes of the of the fusion-based prediction process, e.g., only M of the N best prediction modes of the fusion-based prediction process, with M < N.
- the third amount comprises all of the prediction modes of the of the fusion-based prediction process, e.g., the N best prediction modes of the fusion-based prediction process,.

13. The method of any one of claims 2 to 12, wherein the method comprises:
signaling, e.g., in a data stream, the selected one configuration,
wherein the signaling uses a syntax element indicating the selected configuration.

14. The method of claim 13, wherein
a type of the syntax element is selected dependent on a number of enabled configurations, and/or
a first syntax element, like an index, is selected for a first number of enabled configurations, and a second syntax element, like a flag, is selected for a second number of enabled configurations, and/or
a context for signaling the syntax element is selected dependent on the type of the syntax element, and/or.
a context for the one or more fusion-based prediction processes is obtained dependent on the selected configuration.

15. An apparatus of processing one or more blocks of a picture, the apparatus comprising:
a processing module, wherein the processing module is configured to predict a current block using a fusion-based prediction process configured according to one of a plurality of configurations for one or more fusion-based prediction processes, wherein each configuration employs a different number of prediction modes to be fused.
